# EUROPEAN PATENT APPLICATION

(11) **EP 2 600 166 A2**
(43) Date of publication of application: **05.06.2013**
(21) Application number: 12382367.6
(22) Date of filing: 19.09.2012
(51) Int. Cl.: G01S 7/02

(54) **Radar detector device**

(30) Priority: 01.12.2011 ES 201131247 U
(71) Applicant: Demac S.A., 28660 Madrid (ES)
(72) Inventor: Sanz del Prado, David, 28660 Boadilla del Monte (Madrid) (ES)
(74) Representative: Monzón de la Flor, Luis Miguel

(57) **Abstract**

Radar detector device which comprises two parts (1.1) and (1.2) that make up the antenna in the form of a horn (1) and that it attaches on a basis (2), in whose interior houses: a piece intermediate (riser) (3), a first printed circuit board (4) placed between the base of the antenna in the form of horn (1) and the intermediate piece (3), and a second printed circuit board disposed between the riser (3) and base (2), The two-piece (1.1), (1.2) are flattened and fix each other through a series of holes (1.3) performed on the workpiece (1.2) and through which passes about securing and locking screws obtaining a radar detector which is lighter, less bulky, where housing is active part of the detection circuit, where the signal channeler of waveguide contact directly with the input of the receiver circuit.

## Description

### OBJECT OF THE INVENTION

It is object of the present invention, as sets the title of the invention, a radar detection device that allows to advertise (be warned) the forthcoming presence of radars.

It characterizes the present invention the special configuration and design of each and every one of the pieces which consists of the sensing device to get a sensing device that is lighter and smaller dimensions that came so far making, where the casing that houses the device is an active part of the detection circuit where in addition it emits not no sign of RF abroad, among other advantages.

Therefore, the present invention is confined (included) within the scope of devices for detection of radar and more precisely from their constructive characteristics.

### BACKGROUND OF THE INVENTION

Several types of radar detector devices installed in vehicles such as cars and that preferably, include a plastic case of prismatic shape of reduced height, square and hollow base, to install inside the display of a radar detector detectors are known in the State of the Art (Background)

Among the previous one, one meets Spanish Utility Model publication number ES 1046079U where the display is connected to the antenna and with an external power supply via connectors that access inside the housing of the antenna through recesses to the effect at the rear face of the same.

However, these recesses, and the antenna itself make that you leakage of energy in the spectrum of the RF to the outside of the device, making easier the detection of the detecting device of radar of other receivers whose mission is to turn the detect it.

Another detector of radar as described in the Spanish Utility Model is known is ES 1069118 U that it is compact, do not have a horn of recruitment of sufficient dimensions that achieve a high level of uptake, being large and bulky weight.

Another radar sensor device is described in the Model of utility is ES 1068228 U, which is manufactured from a prismatic solid metal piece that by recess gets conform a hollow Horn-shaped, a filter and a central cavity in which sits the detection device electronics.

While the solution described in this utility model works, it is not exempt from difficulties and areas for improvement, on the one hand, the set is a very heavy and bulky, set where addition is necessary to mount an adapter that shaped hollow pyramidal body arranged between a curved wave guide and the antenna itself or electronics of the assembly on the other hand, other aspect susceptible of improvement is that waveguide does not have a signal channeler, used to increase the network bandwidth.

Therefore, is object of the present invention to overcome aspects and pointed disadvantages, so that the detector object of the invention, among other aspects, is lighter, less bulky, where housing is active part of the detection circuit, where the signal channeler of waveguide contact directly with the input of the receiver circuit, developing a radar detector for these purposes as described below and reflected in its essentiality in the first claim.

### DESCRIPTION OF THE INVENTION

The present invention relates to a radar detection device that prevents the output of radiofrequency from the local oscillator and internal intermediate frequencies toward the outside of the device, to prevent detection of the device by other receivers aimed at this.

The detector consists of four parts assembled and formed together forming a closed set that does not emit radio frequencies to the outside, consisting of two half horns, a riser (piece intermediate) and a base or closure of the set, that docked on the edges of the two horns mean hosting inside the base.

In addition, consists of two printed circuit boards arranged on both sides of the piece intermediate hosted on the inside of the base.

The two half horns are designed in a manner such that have defined among other things, a waveguide with a signal channeler or conduit of signals, and a series of resonant cavities in its lower part. The longest signal channeler of those used so far, and that contact directly with a track or microstrip of the printed circuit board that would ride between the base of the two half horns and the riser (piece intermediate)

The radar detector incorporates a conductive surface treatment and electric conductive adhesive between the perimeter edge of the lower base of the two parts that make up the horn and the top edge of the base of the detector, to avoid the possibility of leakage of radiofrequency energy.

Two top pieces attached define a horn-shaped antenna which is situated between the signal input to the receiver circuit and abroad, in order to receive the signal from radar to detect.

Between receiving horn-shaped cavity and the electronic detector includes a waveguide to prevent the passage of any frequency below which the detector is designed.

The waveguide includes a filter that allows entry to the receiver of the frequencies that have been detected in the detector without attenuation, and which prevents the RF output from the opening of the antenna outside.

Likewise, there is an intermediate piece between the intermediate frequency and microwave circuits, designed to accommodate the walls of separation between the different stages of the receiver.

### EXPLANATION OF THE FIGURES (DRAWINGS)

To complement the description that is in progress and to help to a better understanding of the features of the invention, in accordance with a benchmark example of practical realization of the same, comes as an integral part of the description, a set of drawings on where with illustrative and not limited, has been represented as follows.
In Figure 1, we see a general representation of the detector in side view.
Figure 2 shows a top view of the detector.
In Figure 3 shown partially in perspective to the detector, main way to appreciate the other side of the detector.
In Figure 4, a breakdown of the parts that are part of the detector, having represented only a half horn in order to appreciate the interior shown in perspective.
Figure 5 demonstrates how that presents the underside of the two coupled half horns
Figure 6 shows the middle piece on the inside of the base.
In Figure 7, the detector has represented without the base being able to see inside housed on the base.

### PREFERRED EMBODIMENT OF THE INVENTION

Looking at the figures they describe a mode of preferential realization of the proposed invention.

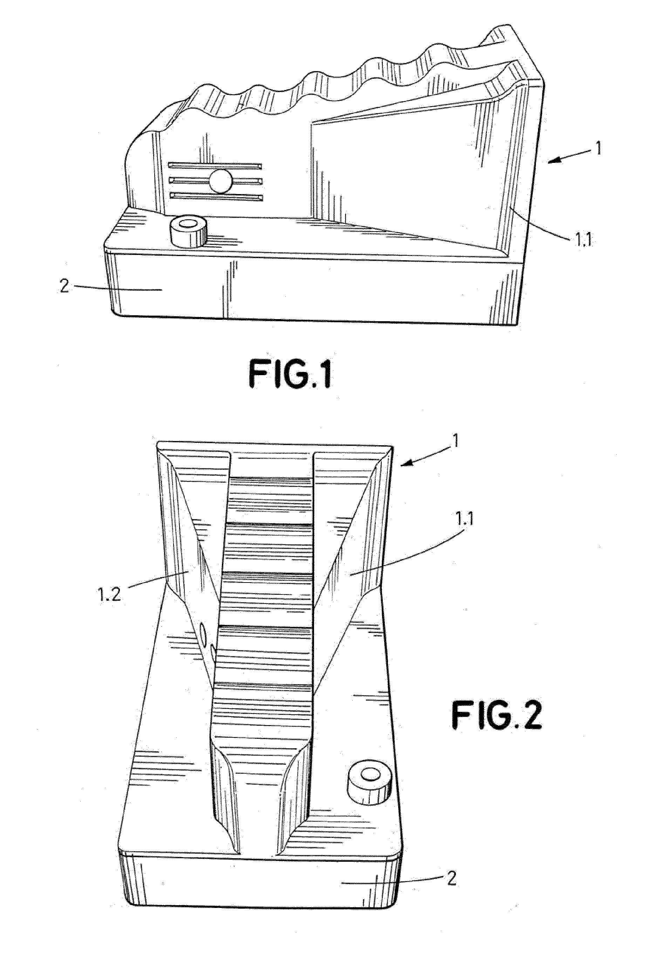

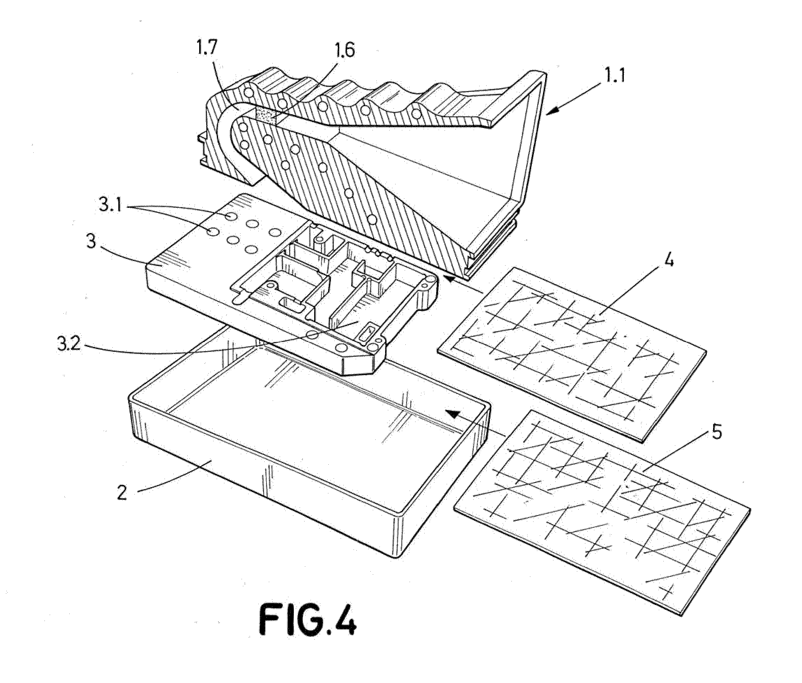

In figures 1, 2 and 3, can see the radar detector device object of the invention comprising two pieces (1.1) and (1.2) that make up the antenna in the form of a horn(1), a base (2) , inside which a middle part (3), a first (4) prepared integrated circuit board sits between the base of the horn shaped antenna (1) and the middle (intermediate) piece (riser) (3), and a second integrated circuit board disposed between the riser (3) and (2) base, as you can see in detail in Figure 4.

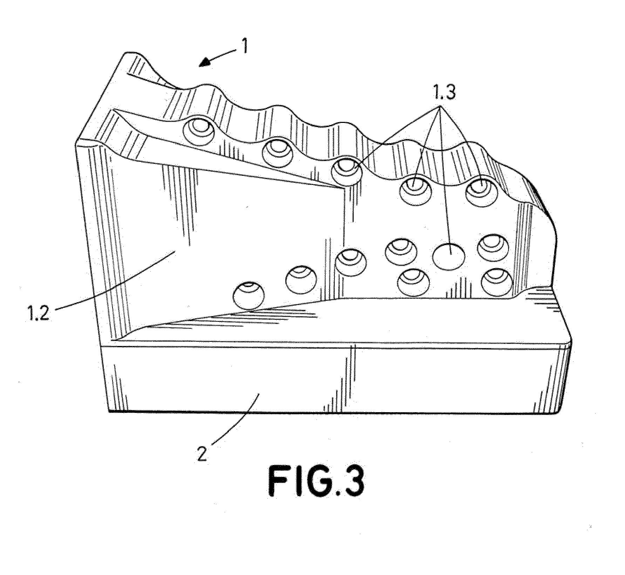

The two-piece (1.1), (1.2) are flattened and fix each other through a series of holes (1.3) performed on the workpiece (1.2) and through which passes about securing and locking screws, as shown in Figure 3

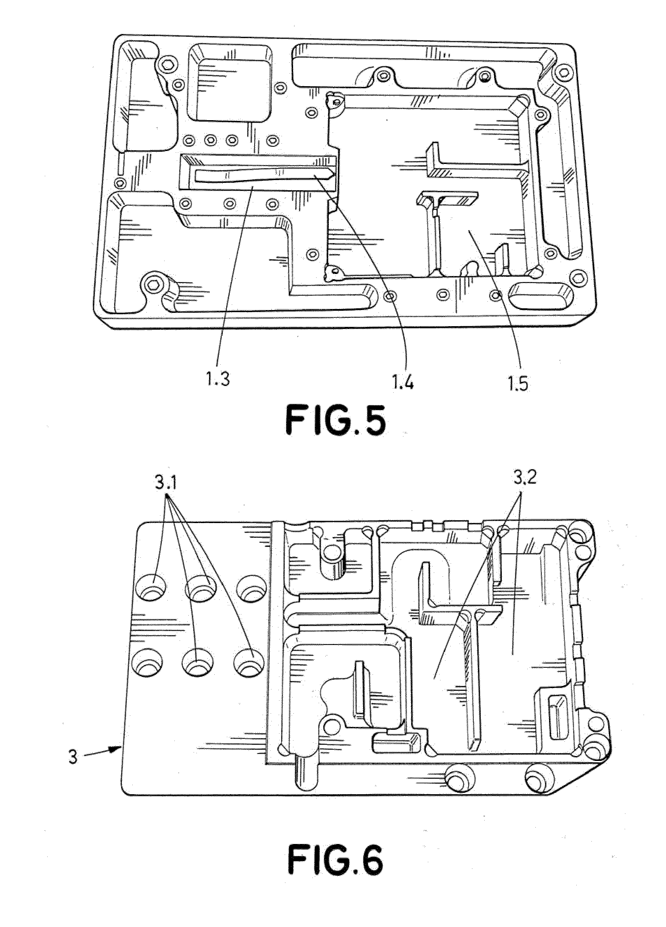

On Figure 4 you can see the detector consists of an antenna in the form of horn made up of two parts (1.1) and (1.2) attached and secured, and which also defines a waveguide (1.7) where there is defined a specific design for a certain frequency filter (1.6) later said waveguide (1.7) continued on the underside of the pieces (1.1) and (1.2) attached, as you can see in Figure 5, where you can see waveguide (1.9) in the central part there is a ridge (1.4), feature that other detectors filters do not have, and also the signal channeler presents is a length of the longest length of the used so far, and allows their direct contact with the track of the integrated circuit board. Also, you can see in Figure 5, a series of resonant cavities and stages of reception (1.5) separators.

The waveguide (1.7) includes an iris type filter (1.6), posts or plates, with double frequency, allowing the RF signal input in the device receiving bands without attenuation (bands K:24.125 Ghz Ka:33.7 - 36 GHz), attenuating the remaining frequencies, especially those of the internal local oscillator and the product of mixing with the intermediate frequencies.

It is important to note that as a whole, and particularly the two pieces (1.1) and (1.2) attached and secured, in addition to defining a horn shaped antenna and a waveguide, part of the detector housing, therefore, have been an optimization of parts, so that in the present invention accommodation is an active element in the detection electronics serving not only accommodation.

This differential characteristic (specification) is very important, since it is derive significant advantages of use and service, on the one hand, gets a smaller sensor size and weight, in addition to having a waveguide that allows to have a signal channeler and also has a significant length, allows the direct contact with the integrated circuit boar. it greatly improves the sensitivity of the detector.

In Figure 6, you can see the middle piece (3), which has a flat prismatic configuration, and where there is carried out a number of perforations (3.1) for its fixing to the base of the assembly made up of two parts (1.1) and (1.2) once engaged, and on which also there is defined a series of resonant cavities and stages (3.2) separators.

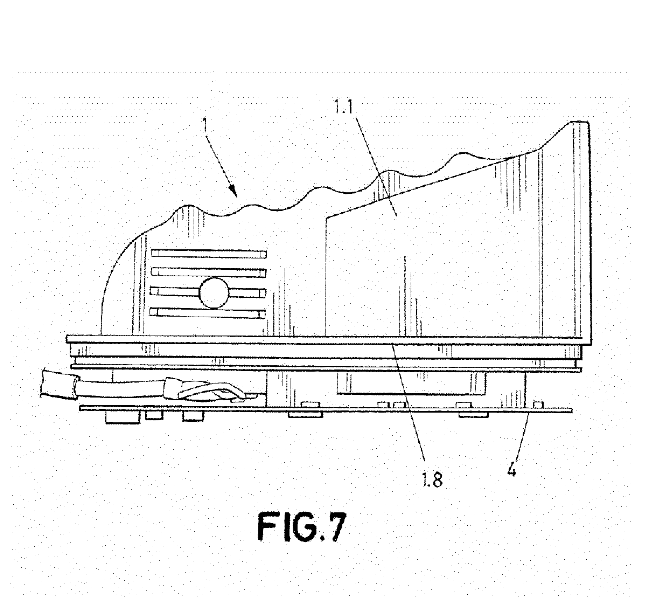

Finally, in Figure 7 should be noted the presence of a step edge (1.8) at the base of the horn-shaped antenna formed by coupling and fastening of two parts (1.1) and (1.2), between the step edge (1.8) and the top perimeter of the base (2) an electrical conductor which likewise avoided the possibility of leakage of radio frequency energy.

Therefore, a radar detector is achieved thanks to the features described:
- Which allows an increase in the area of the Horn, resulting in a greater gain to the signal input
- Which has a lower total length of the assembly
- Featuring one weight less than other radar detectors thanks to the possibility to machining the horn externally
- Featuring a fully closed wave guide, and optimized for the band Ka
- Which includes a filter that prevents the RF output out now is step band.
- The size of the ridge is now much higher than those used to time-account with a printed circuit board that is integrated into the housing not as an attachment, but as part of the set. This is important to emphasize it
- The waveguide incorporates a curve that rotates 180 degrees (can be another angle) in order to use a horn of large dimensions, with equal or lower total length of the device.

Sufficiently described the nature of the present invention, as well as how to put it into practice, it is noted that, in its essence, it may be brought to the practice in other forms of conduct that differ in detail of the indicated for example, and which will also reach the protection that is collected, provided that you do not alter, change or modify its fundamental principle.

## Claims

1. Radar detector device characterized because it comprises two parts (1.1) and (1.2) that make up the antenna in the form of a horn (1) and that it attaches on a basis (2), in whose interior houses a piece intermediate (riser) (3), (4) prepared a first printed circuit board between the base of the antenna in the form of horn (1) and the intermediate piece (3), and a second printed circuit board disposed between the riser (3) and base (2)

2. Radar detector device, according to claim 1, **characterized in that** the two parts (1.1), (1.2) are flattened and fix each other through a series of holes (1.3) performed on the workpiece (1.2) and through which passes about fixing screws and close-out

3. Radar Detector device, according to claim 1, **characterized in that** the two parts (1.1), (1.2) attached and secured is defined a waveguide (1.7) where there is defined a filter (1.6) of specific design for certain frequencies, then this guide of waves (1.7) continue on the underside of the parts attached (1.1), (1.2) where there is defined a guide of waves (1.9) in the central part there is a ridge (1.4), that directly contact the track on the printed circuit board, as well as a series of resonant cavities and stages of reception (1.5) separators.

4. Radar detector device, according to claim 1, **characterized in that** the intermediate piece (3), which has a flat prismatic configuration, and where there is carried out a number of perforations (3.1) for fixing the base unit consisting of two parts (1.1), (1.2), once coupled, and on which there is also defined a series of resonant cavities and spacers from stages of reception (3.2).

5. Radar detector device, according to claim 1, **characterized in that** the sensor incorporates a conductive surface treatment and electric conductive adhesive between a perimeter edge (1.8) defined at the lower base of the horn shaped antenna(1) and the detector's top perimeter of the base (2) an electrical conductor which prevent possible leaking of energy in the form of radiofrequency.

6. Radar detector device, according to claim 3, **characterized in that** the waveguide (1.7) includes an iris type filter (1.6), posts or plates, with double frequency, allowing nonfading RF signal entering the device reception bands (bands K: 24.125 GHz; Ka: 33.7 - 36 GHz), attenuating the remaining frequencies especially those of the internal local oscillator and the product of mixing with the intermediate frequencies.
